# EUROPEAN PATENT APPLICATION

(11) **EP 1 865 571 A1**
(43) Date of publication of application: **12.12.2007**
(21) Application number: 07007392.9
(22) Date of filing: 11.04.2007
(51) Int. Cl.: H01Q 1/12, B60J 1/00

(54) **Window glass with conductive ceramics-sintered body and method for manufacturing the same**

(30) Priority: 14.04.2006 JP 2006111938
(71) Applicant: Nippon Sheet Glass Company Limited, Minato-ku Tokyo 1058552 (JP)
(72) Inventor: Yamada, Kazuo, c/o Nippon Sheet Glass Co., Ltd., Tokyo, 108-6321 (JP); Ono, Kazuhisa, c/o Nippon Sheet Glass Co., Ltd., Tokyo, 108-6321 (JP)
(74) Representative: Kohler Schmid Möbus

(57) **Abstract**

A window glass (1) with a conductive ceramics-sintered body (3) which has an improved appearance while allowing the conductive ceramics-sintered body (3) to be kept conductive. The window glass (1) with a conductive ceramics-sintered body (3) comprises a glass plate (2) and the conductive ceramics-sintered body (3) formed on at least one principal surface of the glass plate (2) and containing silver. The conductive ceramics-sintered body (3) contains a silver compound on a surface of the sintered body (3).

## Description

### BACKGROUND OF THE INVENTION

### Field of the Invention

The present invention relates to a window glass with a conductive ceramics-sintered body and a method for manufacturing the window glass with the conductive ceramics-sintered body.

### Description of the Related Art

A window glass for use in vehicles or the like has been known which has a conductive ceramics-sintered body such as an antenna wire, a defogger, or the like formed on at least one principal surface (hereinafter referred to as "the print surface") thereof. The conductive ceramics-sintered body is formed on the print surface of the window glass by screen-printing a conductive paste-containing silver and a glass binder on the print surface of the window glass in a predetermined pattern and heating the window glass to sinter the conductive paste.

The conductive ceramic-sintered body appears white as viewed from the print surface side and brownish red as viewed from the surface opposite to the print surface. Deep-colored window glasses are often used in vehicles. Consequently, particularly as viewed from the print surface side, the conductive ceramics-sintered body appears noticeably white and may be unpleasant to the eye.

Thus, a vehicle window glass has been proposed in which a pigment or a coloring agent is added to a conductive paste so that the color of a portion of the window glass in which the conductive ceramics-sintered body is formed exhibits a CIE 1976 psychometric lightness L* value of 50 to 70 as viewed from the print surface side (from the interior) (see, for example, Japanese Laid-Open Patent Publication (Kokai) No. 2001-206056) .

On the other hand, techniques for halogenating (chlorinating or brominating) silver have been known (see, for example, Japanese Laid-Open Patent Publication (Kokai) No. H10-253573 and Japanese Laid-Open Patent Publication (Kokai) No. H07-086275). Halogenating silver results in black silver halide.

However, in the vehicle window glass described in Japanese Laid-Open Patent Publication (Kokai) No. 2001-206056, the color of a portion of the window glass in which the conductive ceramics-sintered body is formed exhibits a CIE 1976 psychometric lightness L* value of 50 to 70 as viewed from the print surface side. This is not a sufficiently low lightness. Consequently, the conductive ceramics-sintered body appears noticeably white as viewed from the print surface side.

Further, in the vehicle window glass described in Japanese Laid-Open Patent Publication (Kokai) No. 2001-206056, the pigment or coloring agent is added to and dispersed in the conductive paste, thereby reducing the content by percentage of silver in the conductive paste, which increases the resistance value of the conductive ceramics-sintered body.

### SUMMARY OF THE INVENTION

The present invention provides a window glass with a conductive ceramics-sintered body which has an improved appearance while allowing the conductive ceramics-sintered body to be kept conductive, and a method for manufacturing the window glass with the conductive ceramics-sintered body.

In a first aspect of the present invention, there is provided a window glass with a conductive ceramics-sintered body according to claim 1 provides a window glass with a conductive ceramics-sintered body comprising a glass plate and the conductive ceramics-sintered body formed on at least one principal surface of the glass plate and containing silver, characterized in that the conductive ceramics-sintered body contains a silver compound on a surface of the sintered body.

With this arrangement, it is possible to improve the appearance of the window glass while keeping the conductivity of the conductive ceramics-sintered body.

The conductive ceramics-sintered body can have a surface layer mainly comprising a silver compound on a surface thereof and internally has an internal layer mainly comprising silver.

The internal layer can contain a silver compound, and the content by percentage of the silver compound in the internal layer is lower than that in the surface layer.

The surface layer can have a denser structure than the internal layer.

The conductive ceramics-sintered body can contain silver on at least a part of a surface of the surface layer.

With this arrangement, it is possible to adjust the tint of the conductive ceramics-sintered body.

A portion of the window glass in which the conductive ceramics-sintered body is formed can exhibit a CIE 1976 lightness L* value of at most 50 in a CIE 1976 L*a*b* color system as viewed from a side of the window glass on which the conductive ceramics-sintered body is formed.

With this arrangement, the color of the portion in which the conductive ceramics-sintered body is formed can be made darker and thus unnoticeable. This enables the appearance of the window glass to be improved.

The portion of the window glass in which the conductive ceramics-sintered body is formed can exhibit a color coordinate a* value of -12 to 12 and a color coordinate b* value of -12 to 12 in the CIE 1976 L*a*b color system as viewed from the side of the window glass on which the conductive ceramics-sintered body is formed.

With this arrangement, it is possible to adjust the tint of the conductive ceramics-sintered body.

The silver compound can contain at least one of silver halide, silver sulfide, silver oxalate, and silver oxide.

The silver compound can comprise at least one type of silver halide.

The silver compound can mainly comprise silver chloride.

With this arrangement, it is possible to offer chemical stability and improve the appearance of the window glass by a simple treatment.

The conductive ceramics-sintered body can have a resistivity value of 3 to 70 µΩcm.

With this arrangement, it is possible to keep the conductivity of the conductive ceramics-sintered body.

In a second aspect of the present invention, there is provided a method for manufacturing a window glass with a conductive ceramics-sintered body, characterized by comprising a printing step of printing a conductive paste containing silver on at least one principal surface thereof; a sintering step of sintering the printed conductive paste to form a conductive ceramics-sintered body; and a chemically treating step of performing a chemical treatment on the silver on a surface of the conductive ceramics-sintered body formed to convert the silver into a silver compound.

With this arrangement, it is possible to improve the appearance of the window glass while keeping the conductivity of the conductive ceramics-sintered body.

The window glass manufacturing method can further comprise a polishing step of polishing the surface of the conductive ceramics-sintered body formed.

With this arrangement, it is possible to smooth the surface of the conductive ceramics-sintered body.

The present invention will now be described in detail below with reference to the accompanying drawings showing an embodiment thereof.

### BRIEF DESCRIPTION OF THE DRAWINGS

FIG. 1 is a view showing the arrangement of a window glass with a conductive ceramics-sintered body according to an embodiment of the present invention;

FIG. 2 is a sectional view of the glass plate shown in FIG . 1 and having an antenna wire formed on its interior surface;

FIG. 3 is a view which is useful in explaining that silver on a surface of the antenna wire in FIG. 2 has been converted into silver chloride;

FIG. 4 is a view which is useful in explaining that a surface layer having much silver chloride has been formed on the surface of the antenna wire in FIG. 3;

FIG. 5 is a view which is useful in explaining that the silver chloride on the surface layer of the antenna wire in FIG. 4 has been partly reduced to sliver;

FIG. 6 is a view which is useful in explaining a test pattern used in an example of the present invention;

FIGS. 7A and 7D are views showing the condition of a cross section of a conductive wire in the example of the present invention, FIGS. 7A to 7D showing samples 0 to 3, respectively; and

FIG. 8A and 8D are views showing the condition of a surface of a conductive wire 13 in the example of the present invention, FIGS. 8A to 8D shows samples 0 to 3, respectively.

### DETAILED DESCRIPTION OF THE PREFERRED EMBODIMENTS

As a result of keen examinations made to attain an object of the present invention, the present inventors have found the following. When, in a window glass with a conductive ceramics-sintered body comprising a glass plate and the conductive ceramics-sintered body formed on at least one principal surface of the glass plate and containing silver, the conductive ceramics-sintered body contains a silver compound on a surface of the sintered body, the appearance of a window glass can be improved with the conductivity of a conductive ceramics-sintered body kept.

The present invention has been made on the basis of the examination results.

An embodiment of the present invention will now be described below in detail with reference to the drawings.

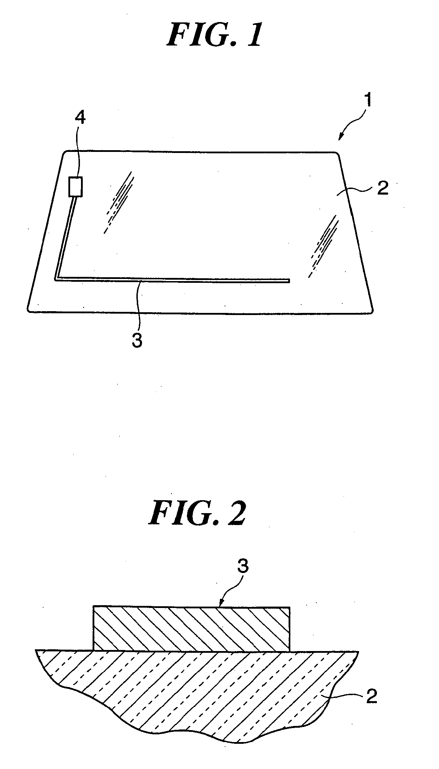

FIG. 1 is a front view showing the arrangement of a window glass with a conductive ceramics-sintered body according to an embodiment of the present invention.

In FIG. 1, a vehicle window glass 1 as a window glass with a conductive ceramics-sintered body according to the embodiment of the present invention comprises a glass plate 2, an antenna wire 3 (conductive ceramics-sintered body) formed on a principal surface which faces the interior of the vehicle (hereinafter referred to as "the interior surface") of the glass plate 2, and a feeding terminal 4 soldered to the antenna wire 3. The line width and thickness of the antenna wire 3 are appropriately determined as required.

The antenna wire 3 is formed on the interior surface of the glass plate 2 as described below.

First, a conductive paste is screen-printed on the interior surface of the glass plate 2 in a predetermined pattern using a 200-mesh polyester screen. This conductive paste contains silver particles of average particle size 0.1 to 15.0 µm, a glass binder (crystallized glass and amorphous glass) such as bismuth and having a softening point of 300 to 620 °C, a transition metal oxide containing an oxide of at least one of vanadium, manganese, iron, and cobalt, a resin such as ethylcellulose and a rosin-containing resin, and an additive. These components are dispersed in an organic solvent such as terpineol and dibutylcarbitol. The amounts of these components based on the conductive paste are 70 to 80 wt% for the silver particles, 1 to 10 wt% for the glass binder and transition metal oxide, 1 to 10 wt% for the resin, 1 to 10 wt% for the additive, and 10 to 20 wt% for the organic solvent.

Then, the glass plate 2 on which the conductive paste is screen-printed is heated at 600 to 900 °C and thus the conductive paste is sintered to form an antenna wire 3 on the interior surface of the glass plate 2 as shown in FIG. 2. This sintering is normally carried out simultaneously with a process for bending and reinforcing the glass plate 2.

At this time, the color of the portion of the window glass in which the antenna wire 3 is formed exhibits a CIE 1976 psychometric lightness L* value of about 70 or more as viewed from the interior surface side. That is, the portion in which the antenna wire 3 is formed appears white as viewed from the interior surface side.

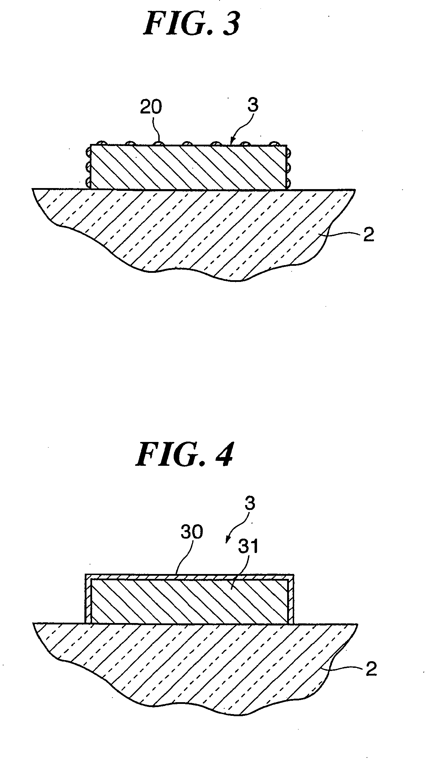

Then, the surface of the antenna wire 3 is polished and thus smoothed with a polishing material (for example, Steel Wool #0000 manufactured by Nippon Steel Wool Co., Ltd.). The silver on the surface of the antenna wire 3 is then chemically treated. That is, a treatment solution (for example, a 10% water solution of sodium hypochlorite (manufactured by Sigma-Aldrich Japan K. K.) diluted twice) is repeatedly applied to the antenna wire 3 until the antenna wire 3 exhibits a predetermined lightness as viewed from the interior surface side. Application of the treatment solution causes the silver on the surface of the antenna wire 3 to be converted into silver chloride 20 as shown in FIG. 3. Repeated application causes a surface layer 30 containing much silver chloride to be formed on the surface of the antenna wire 3 as shown in FIG. 4. The content by percentage of silver chloride in an internal layer 31 is lower than that in the surface layer 30. The surface layer 30 has a lower porosity than the internal layer 31 and thus has a dense structure.

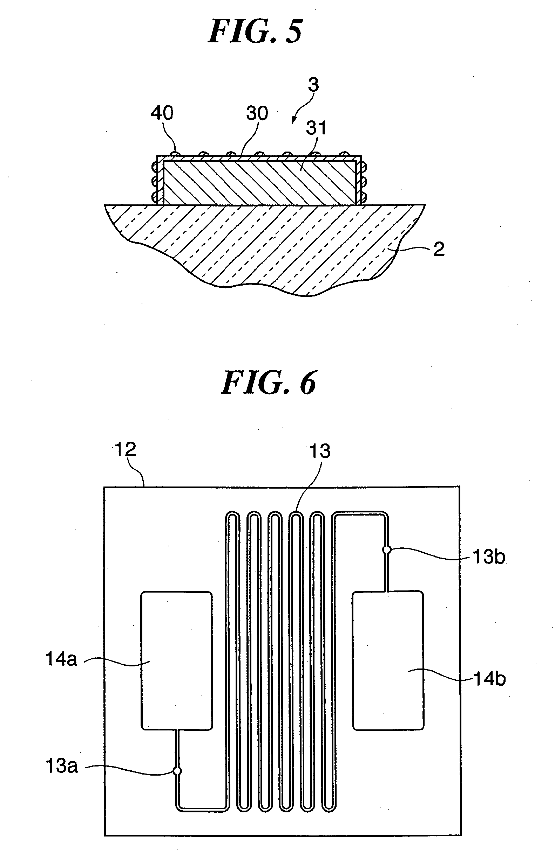

Subsequently, as shown in FIG. 5, the silver chloride in the surface layer 30 of the antenna wire 3 is partly reduced to sliver 40. Here, to make light conditions constant to thereby make the tint of the antenna wire 3 constant as viewed from the interior surface side, the interior surface of the glass plate 2 may be irradiated with ultraviolet rays from a metal halide lamp, for example, for 4 minutes.

In this case, the color of the portion of the window glass in which the antenna wire 3 is formed exhibits a CIE 1976 psychometric lightness L* value of at most 50, preferably at most 45, more preferably at most 40 as viewed from the interior surface side. That is, the portion of the window glass in which the antenna wire 3 is formed exhibits a darker color (brownish red to black) than before the chemical treatment as viewed from the interior surface side. Here, when the color of the portion of the window glass in which the antenna wire 3 is formed exhibits a CIE 1976 psychometric lightness L* value of more than 50 as viewed from the interior surface side, the antenna wire 3 appears noticeably white.

Further, the portion of the window glass in which the antenna wire 3 is formed exhibits a color coordinate a* value of -12 to 12, preferably -5 to 5, more preferably 0 to 5 as viewed from the interior surface side. The portion of the window glass in which the antenna wire 3 is formed exhibits a color coordinate b* value of -12 to 12, preferably -3 to 3, more preferably -2 to 3 as viewed from the interior surface side.

The antenna wire 3 has a resistivity value of 3 to 70 µΩcm. The resistivity value of the antenna wire 3 after the chemical treatment is at most 10 times, preferably at most 3 times, more preferably at most twice as large as that before the chemical treatment.

In the present embodiment, the L* value, a* value, and b* value are specified in the method for displaying colors in JIS Z8729-2004 andmeasuredwith a spectrophotometer (CM-3500d manufactured by KONICA MINOLTA HOLDINGS, INC.).

In the present embodiment, the resistivity value ρ (unit: µΩcm) is obtained as follows. For antenna wires 3 with the same line width and thickness, the resistance value R (unit: µΩ) of a predetermined length d (unit: cm; for example, d = 100 cm) of antenna wire 3 is measured with a digital multimeter. The film sectional area S (unit: cm2) of the antenna wire 3 is measured with a contact shape measuring instrument (P-10 manufactured by KLA-Tencor Corporation). With the predetermined length d, the measured resistance value R, and the film sectional area S, the resistivity value ρ is determined by ρ = RS/d.

According to this embodiment, a treatment solution is repeatedly applied to the antenna wire 3 until the antenna wire 3 exhibits a predetermined lightness as viewed from the interior surface. This enables the color of the antenna wire 3 to be made darker and unnoticeable to improve the appearance of the vehicle window glass 1 while keeping the antenna wire 3 conductive.

In this embodiment, the treatment solution is repeatedly applied to the antenna wire 3 to form a surface layer 30 containing much silver chloride on the surface thereof. However, the present invention is not limited thereto. The silver on the surface of the antenna wire 3 may be chemically treated with another halogen such as bromine and iodine to form another surface layer containing much silver halide on the surface of the antenna wire. Chemically treating the silver with the halogen enables the strength of the antenna wire 3 to be maintained. Further, reducing the silver halide enables the tint of the antenna wire 3 as viewed from the interior surface to be adjusted.

Instead of being chemically treated as described above, the silver on the surface of the antenna wire 3 may be sulfurized, oxalated, or oxidized to form a surface layer containing much sliver sulfide, silver oxalate, or silver oxide on the surface of the antenna wire 3.

This embodiment has been described taking the case where the present invention is applied to the vehicle window glass. However, the present invention is not limited thereto and may be applied to other window glasses such as a merchandize display glass.

In the description of this embodiment, the conductive ceramics-sintered body is the antenna wire 3. However, the present invention is not limited thereto. The conductive ceramics-sintered body may be a defogger (heating wire) formed on the window glass and the like.

[Example] An example of the present invention will be described below.

A conductive paste was screen-printed on one principal surface (hereinafter referred to as "the print surface") of a 200 mm × 500 mm glass plate 12 (MFL210) using a 200-mesh polyester screen, to arrange ten 100 mm × 100 mm test patterns shown in FIG. 6, on the principal surface.

In the test pattern in FIG. 6, a conductive wire 13 has resistance measured points 13a and 13b (length: 1,000 mm) at which the resistance value is measured. The conductive wire 13 has measured portions 14a and 14b of length 40 mm and width 20 mm in which color and lightness are measured.

The conductive paste contains 70 to 80 wt% of silver particles, 1 to 10 wt% of glass such as bismuth and a metal oxide, 1 to 10 wt% of resin comprising ethylcellulose and a rosin-based resin, 1 to 10 wt% of additive, and 10 to 20 wt% of organic solvent comprising terpineol and dibutylcarbitol.

Then, the glass plate 12 on which the conductive paste was screen-printed was heated in a sintering furnace for 5 minutes so that the maximum temperature was 620 °C. The conductive paste was thus sintered to form a conductive wire 13 on the print surface of the glass plate 12. The conductive wire 13 was 0.6 mm in line width and 12.98 µm in thickness. The glass plate 12 was cut into ten 100 mm × 100 mm samples.

Then, the surface of the conductive wire 13 was polished and thus smoothed with a polishing material (Steel Wool #0000 manufactured by Nippon Steel Wool Co. , Ltd.). The silver on the surface of the conductive wire 13 was then chemically treated. That is, the glass plate 12 on which the conductive wire 13 was formed was immersed in a treatment solution obtained by diluting a 10% water solution of sodium hypochlorite (manufactured by Sigma-Aldrich Japan K. K.) twice. The glass plate 12 was left in the treatment solution for 0.5, 6, or 60 minutes.

The treatment solution adhering to the glass plate 12 was flushed with flowing water (running water) for 30 seconds. The moisture was then wiped off from the glass plate 12. The print surface of the glass plate 12 was then irradiated with ultraviolet rays of wavelength 380 to 420 µm from a metal halide lamp (UNILEC URM-300 (GL-30301BF-B) manufactured by USHIO INC.) for 4 minutes. The distance between the light source and the print surface was about 2 m.

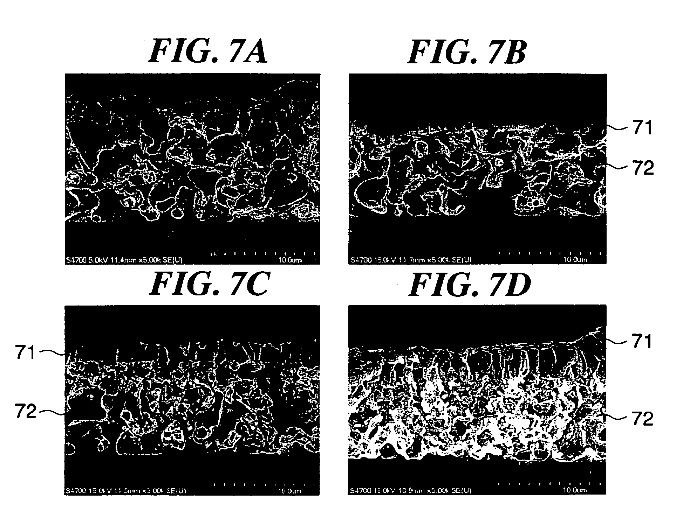

Samples 1, 2, and 3 were prepared which had been immersed in the treatment solution for 0.5, 6, and 60 minutes, respectively. Sample 0 was also prepared which had been sintered (but not subjected to surface polishing). For samples 0 to 3, the cross section of the conductive wire 13 was observed with FE-SEM (S4700) manufactured by Hitachi, Ltd. The results are shown in FIG. 7.

FIGS. 7A to 7D are views showing the condition of a cross section of the conductive wire 13 in the example of the present invention, FIGS. 7A to 7D showing samples 0 to 3, respectively.

FIGS. 7A to 7D show that when the glass plate 12 on which the conductive wire 13 is formed is immersed in the treatment solution (samples 1 to 3), a surface layer 71 is formed which contains much silver chloride on the surface of the conductive wire 13. FIG. 7A shows that the surface layer 71 is not formed on the sintered (not surface-polished) glass plate (sample 0).

The thickness of the surface layer 71 increases consistently with the time for which the sample is immersed in the treatment solution. The surface layer 71 also has a lower porosity than an internal layer 72 and thus has a dense structure.

Table 1 shows the thickness of the entire conductive wire 13 and the thickness of the surface layer 71 in samples 0 to 3.

**[Table 1]**

| Sample Name | Immersion Time (Minutes) | Entire Thickness (µm) | Thickness of Surface Layer (µm) |
|---|---|---|---|
| Sample 0 | - | 12.98 | 0.00 |
| Sample 1 | 0.5 | 9.73 | 0.64 |
| Sample 2 | 6 | 11.70 | 2.29 |
| Sample 3 | 60 | 11.49 | 3.24 |

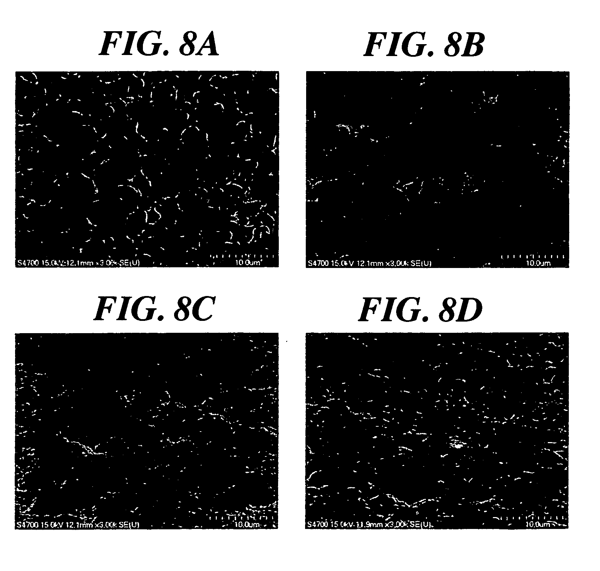

For samples 0 to 3, the surface of the conductive wire 13 was observed with FE-SEM (S4700) manufactured by Hitachi, Ltd. The results are shown in FIG. 8A to 8D.

FIG. 8A to 8D are views showing the condition of a surface of the conductive wire 13 in the example of the present invention. FIGS. 8A to 8D show samples 0 to 3, respectively.

FIG. 8A shows that in the sintered (not surface-polished) glass plate (sample 0), recesses and protrusions are present on the surface of the conductive wire 13. FIGS. 8B to 8D show that when the glass plate 12 on which the conductive wire 13 is formed is immersed in the treatment solution (samples 1 to 3), the surface is smoothed. Further, the size of silver chloride formed increases consistently with the time for which the sample is immersed in the treatment solution. The surface of the conductive wire 13 thus has a dense structure.

For samples 1 to 3, the resistance value of the conductive wire 13 was measured at the resistance measured points 13a and 13b (length: 1,000 mm) on the conductive wire 13 after sintering, after surface polishing, after chemical treatment, and after ultraviolet irradiation. Calculations were then made of the rate of change in resistance value from the end of surface polishing to the end of chemical treatment and the rate of change in resistance value from the end of chemical treatment to the end of ultraviolet irradiation. The results are shown in Table 2. Before measuring the resistance value, the silver chloride was removed from the surface layer at the resistance measured points 13a and 13b by polishing.

**[Table 2]**

| | | Resistance Value (Ω) | | | | Rate of Change (-times) | |
|---|---|---|---|---|---|---|---|
| Sample Name | Immersion Time (Minutes) | After Sintering | After Polishing | After Chemical Treatment | After Irradiation | After Chemical Treatment To After Polishing | After Irradiation To After Chemical Treatment |
| Sample 1 | 0.5 | 10.88 | 10.25 | 11.18 | 11.19 | 1.09 | 1.00 |
| Sample 2 | 6 | 10.87 | 10.21 | 18.69 | 18.69 | 1.83 | 1.00 |
| Sample 3 | 60 | 10.67 | 10.13 | 97.30 | 96.56 | 9.61 | 0.99 |

For samples 1 to 3, the rate of change in resistance value from the end of surface polishing to the end of chemical treatment was at most 10-times.

For samples 1 to 3, the resistivity value of the conductive wire 13 was calculated from the lengths of the resistance measured points 13a and 13b and the resistance value of the conductive wire 13 obtained after ultraviolet irradiation. The results are shown in Table 3.

**[Table 3]**

| Sample Name | Resistivity Value After Irradiation (µΩm) |
|---|---|
| Sample 1 | 6.53 |
| Sample 2 | 13.20 |
| Sample 3 | 66.60 |

For samples 1 to 3, the resistivity value of the conductive wire 13 was within the range of 3 to 70 µΩcm.

Then, the print surface of the glass plate 12 that had been immersed in the treatment solution for 6 minutes was then irradiated with ultraviolet rays from an ultraviolet irradiation apparatus (UVA-801/1HOLX0-AA01 manufactured by USHIO INC.) for 2 or 6 minutes. The distance between the light source and the print surface was 100 mm. Samples 4 and 5 were thus prepared which had been irradiated with ultraviolet rays from the ultraviolet irradiation apparatus for 2 and 6 minutes, respectively.

For samples 0 to 5, a spectrophotometer was used to measure the following values for the measured portion 14a or 14b as viewed from the print surface side: a value for the CIE 1931 standard colorimetric system in JIS Z8701-1999, a value for the Hunter's Lab color system, and a value for the CIE 1976 L*a*b* color system in JIS Z8729-2004. Evaluations were also made to determine whether or not the conductive wire 13 was noticeable as viewed from the print surface side. The results are shown in Table 4. In Table 4, "No Good" indicates that the conductive wire 13 is noticeable as viewed from the print surface side, and "Inferior" indicates that the conductive wire 13 is slightly noticeable. "Good" indicates that the conductive wire 13 is almost unnoticeable, and "Excellent" indicates that the conductive wire 13 is unnoticeable.

**[Table 4]**

| Sample Name | Immersion Time (Min.) | Irradiation time (Min.) | X | Y | Z | L | a | b | L* | a* | b* | Evaluation |
|---|---|---|---|---|---|---|---|---|---|---|---|---|
| Sample 0 | - | - | 64.1 | 64.3 | 68.1 | 80.0 | 3.3 | 5.6 | 84.0 | 3.3 | 6.0 | No Good |
| Sample 1 | 0.5 | - | 13.4 | 13.8 | 14.9 | 36.6 | 3.3 | 1.4 | 43.4 | 4.2 | 2.1 | Good |
| Sample 2 | 6 | - | 9.4 | 9.4 | 11.4 | 30.7 | 1.3 | -0.5 | 36.7 | 1.5 | -0.8 | Excellent |
| Sample 3 | 60 | - | 9.8 | 9.8 | 12.0 | 31.3 | 1.3 | -0.8 | 37.5 | 1.5 | -1.1 | Excellent |
| Sample 4 | 6 | 2 | 15.0 | 15.8 | 12.9 | 38.7 | 5.0 | 7.4 | 45.6 | 6.4 | 10.7 | Good |
| Sample 5 | 6 | 6 | 18.5 | 19.2 | 16.0 | 43.0 | 4.4 | 8.1 | 50.1 | 5.4 | 11.3 | Inferior |

When the glass plate was immersed in the treatment solution for 0. 5 minutes (sample 1), the measured portions 14a and 14b exhibited a gray color with a CIE 1976 psychometric lightness L* value of at most 50, that is, a low lightness, as viewed from the print surface side. The conductive wire 13 was almost unnoticeable as viewed from the print surface side.

When the glass plate was immersed in the treatment solution for 6 or 60 minutes (sample 2 or 3), the measured portions 14a and 14b exhibited a dark color with a CIE 1976 psychometric lightness L* value of at most 40 as viewed from the print surface side. The conductive wire 13 was unnoticeable as viewed from the print surface side.

When the glass plate was irradiated with ultraviolet rays from the ultraviolet irradiation apparatus (samples 4 and 5), the CIE 1976 psychometric lightness L* value of color of the measured portions 14a and 14b as viewed from the print surface side was higher than when the glass plate was not irradiated with ultraviolet rays (sample 2). The tint of the measured portions 14a and 14b as viewed from the print surface side changed. That is, it has been found that the CIE 1976 psychometric lightness L* value can be adjusted not only by varying the time for which the glass plate is immersed in the treatment solution but also by irradiating the glass plate with ultraviolet rays after immersion in the treatment solution.

The surface of the conductive ceramics-sintered body thus produced can be glossed by polishing so that this gloss is compatible with the gloss of the surface of the glass plate.

The above-described embodiments are merely exemplary of the present invention, and are not to be construed to limit the scope of the present invention.

The scope of the present invention is defined by the scope of the appended claims, and is not limited to only the specific description in this specification. Furthermore, all modifications and changes belonging to equivalents of the claims are considered to fall within the scope of the present invention.

This application claims the benefit of Japanese Patent Application No. 2006-111938 filed April 14, 2006, which is hereby incorporated by reference herein in its entirety.

## Claims

1. A window glass with a conductive ceramics-sintered body, comprising a glass plate, and a conductive ceramics-sintered body formed on at least one principal surface of the glass plate and containing silver, **characterized in that** the conductive ceramics-sintered body contains a silver compound on a surface of the sintered body.

2. A window glass with a conductive ceramics-sintered body according to claim 1, **characterized in that** the conductive ceramics-sintered body has a surface layer mainly comprising a silver compound on a surface thereof and internally has an internal layer mainly comprising silver.

3. A window glass with a conductive ceramics-sintered body according to claim 2, **characterized in that** the internal layer contains a silver compound, and the content by percentage of the silver compound in the internal layer is lower than that in the surface layer.

4. A window glass with a conductive ceramics-sintered body according to claim 2, **characterized in that** the surface layer has a denser structure than the internal layer.

5. A window glass with a conductive ceramics-sintered body according to claim 2, **characterized in that** the conductive ceramics-sintered body has silver on at least a part of a surface of the surface layer.

6. A window glass with a conductive ceramics-sintered body according to claim 1, **characterized in that** a portion of the window glass in which the conductive ceramics-sintered body is formed exhibits a CIE 1976 psychometric lightness L* value of at most 50 in a CIE 1976 L*a*b* color system as viewed from a side of the window glass on which the conductive ceramics-sintered body is formed.

7. A window glass with a conductive ceramics-sintered body according to claim 6, **characterized in that** the portion of the window glass in which the conductive ceramics-sintered body is formed exhibits a color coordinate a* value of -12 to 12 and a color coordinate b* value of -12 to 12 in the CIE 1976 L*a*b color system as viewed from the side of the window glass on which the conductive ceramics-sintered body is formed.

8. A window glass with a conductive ceramics-sintered body according to claim 1, **characterized in that** the silver compound contains at least one of silver halide, silver sulfide, silver oxalate, and silver oxide.

9. A window glass with a conductive ceramics-sintered body according to claim 8, **characterized in that** the silver compound comprises at least one type of silver halide.

10. A window glass with a conductive ceramics-sintered body according to claim 9, **characterized in that** the silver compound mainly comprises silver chloride.

11. A window glass with a conductive ceramics-sintered body according to claim 1, **characterized in that** the conductive ceramics-sintered body has a resistivity value of 3 to 70 µΩcm.

12. A method for manufacturing a window glass with a conductive ceramics-sintered body, **characterized by** comprising:
a printing step of printing a conductive paste containing silver on at least one principal surface thereof;
a sintering step of sintering the printed conductive paste to form a conductive ceramics-sintered body; and
a chemically treating step of performing a chemical treatment on the silver on a surface of the conductive ceramics-sintered body formed to convert the silver into a silver compound.

13. A method for manufacturing a window glass with a conductive ceramics-sintered body according to claim 12, **characterized by** comprising a polishing step of polishing the surface of the conductive ceramics-sintered body formed.
